(19) Europäisches Patentamt
European Patent Office
Office européen des brevets

(11) Veröffentlichungsnummer: **0 005 167**
**B1**

(12) # EUROPÄISCHE PATENTSCHRIFT

(45) Veröffentlichungstag der Patentschrift: 21.04.82

(51) Int. Cl.³: **C 09 D 3/80**, C 08 F 8/32, C 08 L 33/12

(21) Anmeldenummer: 79100965.7

(22) Anmeldetag: 30.03.79

(54) **Bindemittel für Anstrichmittel.**

(30) Priorität: 29.04.78 DE 2819092

(43) Veröffentlichungstag der Anmeldung: 14.11.79 Patentblatt 79/23

(45) Bekanntmachung des Hinweises auf die Patenterteilung 21.04.82 Patentblatt 82/16

(84) Benannte Vertragsstaaten: BE CH DE FR GB IT NL SE

(56) Entgegenhaltungen:
**GB-A-1 421 130**
**CHEMICAL ABSTRACTS; Band 79, Nr. 14, Oktober 8, 1973, Seite 103, Columbus, Ohio, USA**

(73) Patentinhaber: BASF Aktiengesellschaft, Carl-Bosch-Strasse 38, D-6700 Ludwigshafen (DE)

(72) Erfinder: Geelhaar, Hans Joachim, Dr., Max-Slevogt-Strasse 7, D-6710 Frankenthal (DE)
Erfinder: Penzel, Erich, Dr., Carl-Bosch-Strasse 86, D-6700 Ludwigshafen (DE)
Erfinder: Ley, Gregor, Dr., In den Trankstuecken, D-6719 Wattenheim (DE)

EP 0 005 167 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Bindemittel für Anstrichmittel

Diese Erfindung betrifft Bindemittel für Anstrichmittel und Buntsteinputze, mit denen Anstriche und Buntsteinputze mit sehr stark verminderter Neigung zum Weißanlaufen hergestellt werden können.

Klare Polymerfilme, die aus Polymer-Dispersionen, wie sie als Bindemittel für Anstrichmittel bei Filmbildetemperaturen von meist 5 bis 25° C hergestellt sind, werden bei der Lagerung in Wasser opak. Dies wird als »Weißanlaufen« des Polymer-Films bezeichnet. Es erfolgt je nach Art des Polymerisatfilms und der Temperatur zum Teil schon nach wenigen Sekunden oder auch erst nach Tagen der Wasserlagerung. Das »Weißanlaufen« hängt auch von der Temperatur, bei der der Polymer-Film gebildet wurde, und der Teilchengröße der Polymerisatteilchen sowie von der Teilchengrößenverteilung der Polymer-Dispersion ab und ist reversibel, d. h. beim Trocknen des Films verschwindet das opake Aussehen meist wieder vollständig. Das Weißanlaufen kann besonders bei bindemittelreichen farbigen Anstrichen und bei kunstharzgebundenen Putzen, insbesondere bei Buntsteinputzen, erheblich stören, da es Änderungen des Farbtons der Anstriche bei Durchfeuchtung, z. B. durch Schlagregen, hervorruft. Diese durch das Weißanlaufen bei Feuchtigkeitseinwirkung hervorgerufenen Farbänderungen sind in den ersten Wochen nach der Herstellung der Anstriche bzw. Beschichtungen besonders stark ausgeprägt.

Durch Verwendung verhältnismäßig feinteiliger Polymer-Dispersionen kann zwar die Geschwindigkeit des »Weißanlaufens« verringert werden, doch gelingt es auf diese Weise nicht, das sich schließlich einstellende opake Aussehen zu verhindern oder nennenswert zu vermindern. Beispielsweise zeigt eine farbige Beschichtung auf Basis einer grobteiligen Dispersion eine nennenswerte Farbtonänderung schon nach mehrständigem Schlagregen, wogegen eine entsprechende Beschichtung, die unter Verwendung einer feinteiligen Polymer-Dispersion als Bindemittel hergestellt ist, eine gleichstarke Farbtonänderung erst nach etwa einem Tag zeigt.

Das »Weißanlaufen« tritt bei den üblichen Polymer-Dispersionen auf, die als Bindemittel für Anstrichmittel und Buntsteinputze eingesetzt sind und die Polymerisate mit Glastemperaturen von 0 bis 50° C auf Basis der hierfür üblichen Monomeren enthalten. Derartige Copolymerisate können sich z. B. im wesentlichen aus Gemischen von Methylmethacrylat oder Styrol und n-Butylacrylat, Vinylacetat und n-Butylacrylat, Vinylchlorid und Vinylpropionat oder Styrol und Butadien aufbauen und geringe Mengen, z. B. 1 bis 8 Gew.-% Monomere mit reaktiven Gruppen, z. B. (Meth)acrylsäure oder deren Amide, N-Methylol(meth)acrylamid, Maleinsäureanhydrid, Maleinsäure, N-Methylacrylamid, β-Hydroxypropylacrylat oder -methacrylat, sowie in Mengen bis zu 20% Acryl- und/oder Methacrylnitril einpolymerisiert enthalten.

Es wurde nun gefunden, daß Bindemittel für Anstrichmittel und Buntsteinputze, die aus

(A) einer 20- bis 70%igen wäßrigen Dispersion eines Copolymerisats A einer Glastemperatur von 0 bis 50° C aus
 (a) Methacrylsäuremethylester, Styrol, Vinylacetat, tert.-Butylacrylat und/oder Vinylchlorid und gegebenenfalls zusätzlich Acrylnitril und
 (b) (Meth)acrylsäureestern 2 bis 8 C-Atome enthaltender Alkanole und/oder Vinylpropionat, die
 (c) 0,5 bis 10% ihres Gewichtes an 3 bis 5 C-Atome enthaltenden mono-olefinisch ungesättigten Mono- und/oder Dicarbonsäuren und/oder deren gegebenenfalls an den Stickstoffatomen durch 1 bis 4 C-Atome enthaltenen Alkyl- und/oder Alkylolreste substituierte Amide und
 (d) 0,5 bis 10% ihres Gewichtes an Carbonylgruppen aufweisenden Monomeren einpolymerisiert enthalten,
(B) je Mol in den Copolymerisaten A enthaltenen Carbonylgruppen 0,05 bis 1 Mol wasserlösliche aliphatische Dihydrazin-Verbindungen und
(C) je Mol Dihydrazin-Verbindung 0,0002 bis 0,02 Mol wasserlösliche Zink-, Mangan-, Cobalt- und/oder Bleisalze enthalten,

Filme ergeben, die eine sehr stark verminderte Neigung zum Weißanlaufen aufweisen. Außerdem weisen derartige Filme eine um das mindestens Hundertfache erhöhte Haftung auf Untergründen aus Alkydharzen auf, verglichen mit der Haftung üblicher Dispersionsfilme. Filme aus den neuen Bindemitteln oder diese enthaltenden Anstrichmitteln bzw. Anstrichfarben oder Buntsteinputze weisen im allgemeinen eine um mindestens 80% zurückgedrängte Neigung zum Weißanlaufen auf, d. h. es tritt auch nach 100 Stunden Wasserlagerung bei Raumtemperatur höchstens eine leichte Schleierbildung auf.

Die wäßrigen Dispersionen des Copolymerisats A können in an sich üblicher Weise durch Copolymerisation der Monomeren in wäßriger Emulsion unter Verwendung der üblichen Emulgier- und Dispergierhilfsmittel hergestellt sein und haben meist eine Konzentration an Copolymerisat A von 40 bis 60 Gew.-%. Als Emulgier- und Dispergierhilfsmittel enthalten sie meist 0,2 bis 3 Gew.-%, bezogen auf die Menge des Copolymerisats A, anionische und/oder nichtionische Emulgatoren, wie Natriumdialkylsulfosuccinate, Natriumsalze von sulfatierten Ölen, Natriumsalze von Alkylsulfonsäuren, Natrium-, Kalium- und Ammoniumalkylsulfate, Alkalisalze von Sulfonsäuren, Alkalisalze von

oxalkylierten $C_{12}$- bis $C_{24}$-Fettalkoholen und von oxalkylierten Alkylphenolen, sowie ferner oxäthylierte Fettsäuren, Fettalkohole und/oder Fettamide, oxäthylierte Alkylphenole, ferner Natriumsalze von Fettsäuren, wie Natriumstearat und Natriumoleat. Die Copolymerisate A haben eine Glastemperatur von 0 bis 50°C, vorzugsweise von 15 bis 25°C, und die Glastemperatur wird nach üblichen Methoden, z. B. aus der Messung des E-Moduls im Kriechversuch als Funktion der Temperatur oder mit der DTA (= Differentialthermoanalyse) bestimmt. Die Copolymerisate (A) enthalten als »harte« Comonomere (a) vorzugsweise Methacrylsäuremethylester oder Styrol, doch sind auch solche gut geeignet, die als Comonomere (a) Vinylacetat, tert.-Butylacrylat und/oder Vinylchlorid enthalten. Der Gehalt an Acrylnitril übersteigt im allgemeinen 20% nicht und liegt meist zwischen 0 und 15, vorzugsweise zwischen 5 und 10 Gew.-%. Als Comonomere (b) enthalten die Copolymerisate A Vinylpropionat und/oder Ester aus 2 bis 8 C-Atome enthaltenden Alkanolen, wie Äthanol, Isopropylalkohol, n-Propanol, n-Butanol, Isobutanol oder 2-Äthylhexanol und Acryl- und/oder Methacrylsäure einpolymerisiert. Von besonderem Interesse sind Acrylester von 2 bis 4 C-Atomen enthaltenden Alkanolen, wie besonders Äthylacrylat, n-Butylacrylat und Isobutylacrylat. Die Mengen der Comonomeren (a) und (b) werden so gewählt, daß die Glastemperatur des Copolymerisats A in dem oben angegebenen Bereich liegt. Als Comonomere (c) enthalten die Copolymerisate A 0,5 bis 10, vorzugsweise 1 bis 6% ihres Gewichts an monoolefinisch ungesättigten, 3 bis 5 C-Atome enthaltenden Mono- und/oder Dicarbonsäuren, wie Acrylsäure, Methacrylsäure und Maleinsäure, und/oder ferner deren Amide, wie Acrylamid, Methacrylamid, und/oder deren N-Alkyl, N-Alkylol-derivate, wie N-Methylacrylamid, N-Isobutylacrylamid, N-Methylmethacrylamid, N-Methylolacrylamid, N-Methylolmethacrylamid, N-Äthoxymethylacrylamid, N-n-Butoxymethylacrylamid oder N-Isopropoxymethacrylamid einpolymerisiert. Hierbei weisen die monoolefinisch ungesättigten Dicarbonsäuren und deren Amide 4 bis 5 C-Atome auf, und von den Alkylol-Derivaten werden die Alkylolamide, insbesondere die Methylolamide der 3 bis 5 C-Atome enthaltenden Monocarbonsäuren bevorzugt.

Charakteristisch für die Copolymerisate A ist ihr Gehalt von 0,5 bis 10% ihres Gewichtes an einpolymerisierten, Carbonylgruppen aufweisenden Monomeren (d). Carbonylgruppen aufweisende Monomere im Sinne der Erfindung sind nicht z. B. Ester, wie Äthylacrylat oder Vinylacetat oder Amide, wie Acrylamid oder Carbonsäuren, wie Acrylsäure, sondern Monomere mit mindestens einer Aldo- oder Keto-Gruppe und einer polymerisierbaren Doppelbindung, d. h. insbesondere polymerisierbare monoolefinisch ungesättigte Aldo- und Ketoverbindungen. Von besonderem Interesse als Monomere (d) sind Acrolein, Diacetonacrylamid, Formylstyrol, Vinylalkylketone mit vorzugsweise 4 bis 7 C-Atomen, wie besonders Vinylmethylketon, Vinyläthylketon und Vinylisobutylketon und/oder (Meth)acryloxy-alkylpropanale der allgemeinen Formel (I)

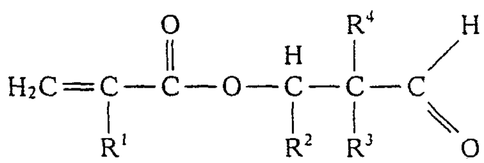

in der $R^1$ für $-H$ oder $-CH_3$, $R^2$ für $-H$ oder einen 1 bis 3 C-Atome enthaltenden Alkylrest, $R^3$ für einen 1 bis 3 C-Atome enthaltenden Alkylrest und $R^4$ für einen 1 bis 4 C-Atome enthaltenden Alkylrest stehen. Derartige (Meth)acryloxyalkylpropanale können nach dem Verfahren der älteren deutschen Offenlegungsschrift 2 722 097.9 durch Veresterung von $\beta$-Hydroxyalkylpropanalen der allgemeinen Formel (II)

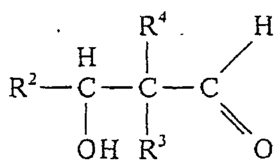

in der $R^2$, $R^3$ und $R^4$ die für die allgemeine Formel (I) angegebene Bedeutung haben, in Gegenwart von indifferenten Verdünnungsmitteln sowie geringen Mengen Sulfonsäuren und Mineralsäuren bei Temperaturen von 40 bis 120, insbesondere von 60 bis 90°C hergestellt sein. Als Ketogruppen tragende Monomere (d) kommen ferner Diacetonacrylat, Acetonylacrylat, Diaceton(meth)acrylat, 2-Hydroxypropylacrylatacetylacetat und Butandiol-1,4-acrylatacetylacetat in Frage. Die Menge der Carbonyl- bzw. Ketogruppen aufweisenden einpolymerisierten Comonomeren (d) beträgt vorzugsweise 1 bis 5 Gew.-%, bezogen auf die Copolymerisate A.

Die neuen Bindemittel enthalten je Mol der in den Copolymerisaten A enthaltenen Carbonyl- bzw. Ketogruppen 0,05 bis 1, vorzugsweise 0,4 bis 0,6 Mol wasserlösliche aliphatische Dihydrazin-Verbindungen. Geeignete Dihydrazin-Verbindungen B sind vor allem Dihydrazide aliphatischer 2 bis 10, insbesondere 4 bis 6 C-Atome enthaltender Dicarbonsäuren, wie Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid und/oder Itaconsäuredihydrazid. Geeignet

sind ferner wasserlösliche aliphatische, 2 bis 4 C-Atome aufweisende Dihydrazine, wie Äthylen-1,2-dihydrazin, Propylen-1,3-dihydrazin und Butylen-1,4-dihydrazin.

Als Komponente C enthalten die neuen Bindemittel 0,0002 bis 0,02 Mol wasserlösliche Salze der Metalle Mangan, Cobalt, Blei und/oder vorzugsweise Zink. Als wasserlösliche Salze dieser Metalle kommen vor allem die Acetate und Sulfate, sowie ferner die Nitrate und Nitrite in Frage; Chloride werden dagegen im allgemeinen für die Bindemittel nicht gerne verwendet, da sie in manchen Fällen unerwünschte Nebenwirkungen aufweisen. In Frage kommen vor allem z. B. Zinksulfat, Mangan-II-sulfat, Cobalt-II-sulfat, die wasserlöslichen Acetate des Zinks, Mangans, Cobalts und Bleis, Bleinitrat, Cobaltnitrat, Mangan-II-nitrat sowie ferner Zinknitrit und Bleinitrit. Von den wasserlöslichen Salzen werden im allgemeinen die Sulfate und Acetate vorgezogen. Der Zusatz an Komponente C kann in manchen Fällen, z. B. wenn unreine Dihydrazin-Verbindungen eingesetzt werden, von Vorteil sein.

Mit den neuen Bindemitteln können in sonst an sich üblicher Weise Anstrichmittel und Buntsteinputze hergestellt werden. Sie sind in gegebenenfalls mit Wasser verdünnter, unpigmentierter Form, z. B. als Grundierungen, geeignet. Für die Herstellung von pigmentierten Anstrichmitteln können die üblichen Pigmente und Pigmentzubereitungen in den üblichen Mengen eingesetzt werden. Geeignet sind vor allem Titandioxid (Rutil), ferner Bleiweiß, Lithopone, sowie Farbpigmentzubereitungen. Als Füllstoffe für die Anstrichmittel können z. B. Kreide, Calcit, Talkum und feiner Sand in den üblichen Mengen eingesetzt werden. Außerdem werden für die Anstrichmittel meist noch ionische und/oder nichtionische Dispergiermittel, z. B. niedermolekulare Polyacrylsäuren oder äthoxyliertes p-Nonylphenol, Verdickungsmittel, wie Celluloseäther, Styrol-Maleinsäure-Copolymerisate und/oder Polyvinylpyrrolidon, Filmbildehilfsmittel, wie Glykoläther, Glykolätheracetate, Pineoil oder bei Raumtemperatur flüssige Alkohole mit 8 bis 15 C-Atomen und 1 bis 3 OH-Gruppen, Konservierungsmittel, wie Chloracetamid oder chlorierte Phenole und/oder Verlaufshilfsmittel, wie Alkylpolyäthylenglykolätherbisurethane eingesetzt werden.

Die neuen Bindemittel sind auch als Bindemittel für Buntsteinputze geeignet und können hierfür in den üblichen Mengen eingesetzt werden. Buntsteinputze enthalten im allgemeinen 5 bis 12% Bindemittel (fest) auf Basis von Copolymerisaten, deren mittlere Filmbildetemperatur (= MFT) üblicherweise über 15°C liegt, und zusätzlich Verdickungsmittel, wie Celluloseäther, Salze hochmolekularer Polyacrylsäuren, und/oder Polyvinylpyrrolidon, sowie Filmbildehilfsmittel, die eine Filmbildetemperatur von $\leq 5°$ ermöglichen. Als Filmbildehilfsmittel werden Ester höherer Fettsäuren, z. B. Adipinsäurediisopropylester, sowie aromatenhaltige Benzine, Glykoläther, Glykolätheracetate und Gemische derselben verwendet.

### Bestimmung der Trocken- und Naßhaftung von Anstrichen auf glänzenden Alkydharzuntergründen

1 mm starke Aluminiumbleche werden mit einem Schwingschleifer in einer Tiefe von etwa 20 µm aufgerauht. Auf diese aufgerauhten Bleche wird mit einer Rakel (Rakelspalthöhe 120 µm) ein 32 cm langer und 6 cm breiter Streifen eines handelsüblichen Alkydharzlackes aufgebracht. Man lagert 24 Stunden bei 23°C und 50% rel. Luftfeuchtigkeit, sowie anschließend 5 Tage bei 45°C im Umluftschrank. Nach weiteren 3 bis 10 Tagen Lagerung bei 23°C und 50% rel. Luftfeuchtigkeit wird auf die Alkydharzoberflächen mit einer 250 µm Rakel (Breite 4 cm) die zu prüfende Polymer-Dispersion oder Anstrichfarbe aufgestrichen. In den noch nassen Auftrag wird ein 6 cm breiter, faltenfreier Streifen eines Baumwollgewebes (Kaliko) unter leichtem Druck eingelegt und sofort durch 3maliges Hin- und Herbewegen einer 250 µm Rakel weitere Dispersion oder Anstrichfarbe aufgebracht. Es wird nun bei Prüfung von Polymer-Dispersionen 3 bis 4 Tage, bei Prüfung einer Anstrichfarbe 1 bis 4 Wochen getrocknet und dann die Ränder der Probestreifen abgeschnitten, so daß eine Streifenbreite von 3,5 cm resultiert.

Die Probestreifen werden dann zur Hälfte 2 Stunden lang in vollentsalztes Wasser gestellt. Anschließend wird das Baumwollgewebe mit Hilfe der in DIN 53 289 angegebenen Rollenschälvorrichtung mit einer Abzugsgeschwindigkeit von 3 m/min abgezogen. Dabei wird beim Abziehen mit Hilfe der Reißmaschine die Schälkraft jeweils sowohl im trocknen als auch im gewässerten Teil des Probestreifens gemessen und das Bruchbild beurteilt. Die Schälkraft wird in üblicher Weise auf die Breite der Probe bezogen.

Die in den folgenden Beispielen angegebenen Teile und Prozente beziehen sich auf das Gewicht. Die darin angegebenen LD-Werte (Lichtdurchlässigkeitswerte) geben den Prozentsatz an weißem Licht an, der von einer 0,01%igen Dispersion bei einer Schichtdicke von 2,5 cm durchgelassen wird.

### Beispiel 1

In einem Reaktionsgefäß mit Thermostat, Ankerrührer, Rückflußkühler, Zulaufgefäßen, Thermometer und Stickstoffeinleitung werden vorgelegt:

| | |
|---|---|
| 1050 Teile | Wasser |
| 13,5 Teile | einer 35%igen wäßrigen Lösung des Natriumsalzes eines Schwefelsäurehalbesters eines mit 20 Mol Äthylenoxid umgesetzten p-Nonylphenols (anionischer Emulgator) |
| 45 Teile | einer 20%igen Lösung eines mit 25 Mol Äthylenoxid (nicht ionischer Emulgator) umgesetzten p-Nonylphenols |

Als Zulauf I dient eine Mischung aus:

| | |
|---|---|
| 504 Teilen | Wasser |
| 66 Teilen | einer 35%igen Lösung des oben angegebenen anionischen Emulgators |
| 880 Teilen | Methylmethacrylat |
| 850 Teilen | n-Butylacrylat |
| 95 Teilen | Acrolein |
| 20 Teilen | Acrylsäure |
| 30 Teilen | Acrylamid |

Im Zulaufgefäß II wird eine Lösung von 7,5 Teilen Kaliumpersulfat in 180 Teilen Wasser bereitet.

Der Reaktor wird gründlich mit Stickstoff gespült. Dann werden 10% des Zulaufs I zur Vorlage gegeben und die Mischung auf 90° C erwärmt. Es werden 10% des Zulaufs II in einem Guß in den Reaktor gegeben und dann die Zuläufe I und II gleichmäßig nebeneinander in 3 bzw. 3,5 Stunden dem Reaktor zugefahren. Nach Zulaufende wird die Temperatur noch 1½ Stunden bei 90° C gehalten, der Reaktor dann auf Raumtemperatur abgekühlt, der pH-Wert der Dispersion mit Ammoniakwasser auf bis 7 bis 8 gestellt, 35 Teile Adipinsäuredihydrazid und 20 Teile einer 1%igen wäßrigen Zinksulfatlösung zugegeben und etwa 1 Stunde nachgerührt.

Man erhält eine feinteilige Dispersion des LD-Werts 90% mit einem Feststoffgehalt von 48%, deren Film im Rollenschälversuch eine Haftung von 19,6 N/3,5 cm besitzt und der auch nach 1 Woche Lagerung in Wasser nur schwach getrübt wird, aber nicht weiß anläuft.

## Vergleichsversuche

(a) Man verfährt wie oben angegeben, unterläßt aber die Zugabe des Adipinsäuredihydrazids. Die Naßhaftung eines Films der Dispersion im Rollenschälversuch ist dann <1,96 N/3,5 cm. Ein 0,5 mm dicker Film ist nach 1 Woche Wasserlagerung bei Raumtemperatur opak-weiß.

(b) Man verfährt wie in Beispiel 1 angegeben, unterläßt aber die Zugabe von Acrolein bei der Polymerisation. Die Naßhaftung eines Films der Dispersion ist dann gleichfalls <1,96 N/3,5 cm. Ein 0,5 mm dicker Film ist nach 1 Woche Wasserlagerung bei Raumtemperatur opak-weiß.

## Beispiel 2

Man verfährt wie im Beispiel 1 angegeben, verwendet jedoch als Vorlage:

| | |
|---|---|
| 1050 Teile | Wasser |
| 18 Teile | der Dispersion aus Beispiel 1 |

Anstelle des Emulsionszulaufs I verwendet man getrennte Zuläufe, nämlich

| | | |
|---|---|---|
| Ia | 880 Teile | Methylmethacrylat |
| | 850 Teile | n-Butylacrylat |
| | 95 Teile | Acrolein |
| Ib | 504 Teile | Wasser |
| | 20 Teile | Acrylsäure |
| | 30 Teile | Acrylamid |

Man verfährt sonst wie in Beispiel 1 angegeben, wobei die Zuläufe Ia und Ib gleichmäßig nebeneinander dem Reaktor zugefahren werden.

Der erhaltenen Dispersion, deren pH-Wert mit Ammoniakwasser auf 7 bis 8 gestellt ist, gibt man 35 Teile Glutarsäuredihydrazid und 20 Teile 1%ige wäßrige Cobaltsulfatlösung zu. Man erhält eine grobteilige Dispersion (LD-Wert ≃25), die im Rollenschälversuch eine Naßhaftung des Films von 9,81 N/3,5 cm aufweist. Filme aus der Dispersion zeigen verminderte Neigung zum Weißanlaufen.

Beispiel 3

Man verfährt wie im Beispiel 1 angegeben, verwendet aber als Zulauf I während der ersten $1^1/_2$ Stunden eine Mischung aus:

252 Teilen Wasser
33 Teilen einer 35%igen Lösung des in Beispiel 1 angegebenen anionischen Emulgators
15 Teilen Acrylamid
10 Teilen Acrylsäure
430 Teilen Methylmethacrylat
420 Teilen n-Butylacrylat
130 Teilen Acrolein

als Zulauf II während der zweiten $1^1/_2$ Stunden eine Mischung aus:

252 Teilen Wasser
33 Teilen einer 35%igen Lösung des in Beispiel 1 angegebenen anionischen Emulgators
15 Teilen Acrylamid
10 Teilen Acrylsäure
430 Teilen Methylmethacrylat
420 Teilen N-Butylacrylat

Der Dispersion, deren pH-Wert durch Zugabe von Ammoniakwasser auf 7 bis 8 gestellt ist, fügt man 35 Teile Bernsteinsäuredihydrazid, und 20 Teile 1%ige wäßrige Mangansulfatlösung zu. Man erhält eine feinteilige Dispersion (LD-Wert ≃30), die einen Film ergibt, der im Rollenschälversuch eine Naßhaftung des Films von mehr als 19,61 N/3,5 cm aufweist. Filme aus der Dispersion zeigen verminderte Neigung zum Weißanlaufen.

Beispiel 4

Im Reaktor werden 350 Teile Wasser vorgelegt. Man arbeitet wie in Beispiel 1 angegeben und verwendet als Zulauf I eine Mischung aus:

230 Teilen Wasser
20 Teilen einer 35%igen Lösung des in Beispiel 1 angegebenen anionischen Emulgators
10 Teilen einer 40%igen Lösung des Natriumsalzes von $C_{14}-C_{16}$-Alkylsulfonat
375 Teilen Methylmethacrylat
325 Teilen 2-Äthylhexylacrylat
50 Teilen Acryloyloxypivalinaldehyd

als Zulauf II eine Lösung von 5,6 Teilen Kaliumpersulfat in

180 Teilen Wasser

Der Reaktor wird mit Stickstoff gespült, Vorlage und 5% des Zulaufs I zusammen auf 85°C aufgeheizt und dann 5% des Zulaufs II in einem Guß zugegeben. Nach 15 Minuten wird begonnen die Reste des Zulaufs I und Zulaufs II innerhalb von 2 Stunden gleichmäßig nebeneinander dem Reaktor zuzufahren. Nach Zulaufende wird 1 Stunde lang bei 85°C gehalten, auf Raumtemperatur abgekühlt, mit Ammoniakwasser der pH auf 7 bis 8 eingestellt, 15 Teile des Dihydrazids eines technischen Dicarbonsäuregemischs (bestehend im wesentlichen aus Bernsteinsäure, Glutarsäure und Adipinsäure) und 10 Teile einer 1%igen wäßrigen Zinksulfatlösung zugegeben und 1 Stunde nachgerührt.

Man erhält eine etwa 48%ige feinteilige Dispersion (LD-Wert ≃80), die Filme ergibt, die im Rollenschälversuch eine Naßhaftung von etwa 7,85 N/3,5 cm haben. Filme aus der Dispersion zeigen verminderte Neigung zum Weißanlaufen.

Beispiel 5

In einem Reaktor legt man ein Gemisch aus

700 Teilen Wasser
1,5 Teilen einer frisch bereiteten 1%igen wäßrigen Eisensulfatlösung vor

Als Zulauf I wird eine Mischung verwendet aus:

| | |
|---|---|
| 365 Teilen | Wasser |
| 25 Teilen | einer 35%igen Lösung des anionischen Emulgators aus Beispiel 1 |
| 15 Teilen | einer 40%igen Lösung des Natriumsalzes eines $C_{14}$—$C_{16}$-Alkylsulfonats |
| 650 Teilen | Methylmethacrylat |
| 750 Teilen | i-Butylacrylat |
| 75 Teilen | Diacetonacrylamid |

als Zulauf II eine Lösung aus 11,5 Teilen Kaliumpersulfat in 365 Teilen Wasser.
Als Zulauf III eine Mischung aus:

| | |
|---|---|
| 100 Teilen | Wasser |
| 15 Teilen | einer 35%igen wäßrigen Lösung des in Beispiel 1 angegebenen anionischen Emulgators |
| 7,5 Teilen | einer 40%igen Lösung des Natriumsalzes eines $C_{14}$—$C_{16}$-Alkylsulfonats und |
| 2 Teilen | Natriumsulfoxylat |

Die Vorlage wird mit Stickstoff gespült und auf 45° C aufgeheizt. Man legt dann je 5% der Zuläufe I und II vor und startet die Polymerisation durch Zugabe von 5% des Zulaufs III in einem Guß. 15 Minuten später beginnt man dann die Zuläufe I, II und III gleichmäßig in 2, 2¹/₄ bzw. 2¹/₂ Stunden dem Reaktor zuzufahren, wobei die Innentemperatur bei etwa 50° C gehalten wird. Nach Ende des Zulaufs I wird die Temperatur auf 85° C erhöht und für 1¹/₂ Stunden dort gehalten. Man kühlt dann auf Raumtemperatur, stellt mit Ammoniakwasser den pH der Dispersion auf 7 bis 8 und rührt noch 30 Teile Adipinsäuredihydrazid und 20 Teile einer 1%igen wäßrigen Zinksulfatlösung ein.

Die feinteilige Dispersion (LD-Wert ≃85) mit einem Feststoffgehalt von 46% ergibt Filme, die im Rollenschälversuch eine Naßhaftung von mehr als 14,71 N/3,5 cm aufweisen. Filme aus der Dispersion zeigen verminderte Neigung zum Weißanlaufen.

## Beispiel 6

Man arbeitet wie im Beispiel 5 angegeben, setzt aber Acetonylacrylat anstelle von Diacetonacrylamid und 40 Teile einer Verbindung der allgemeinen Formel

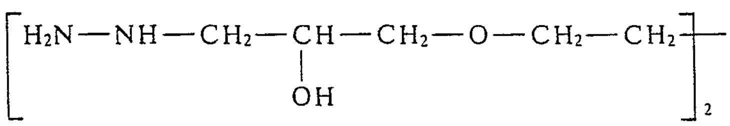

anstelle des Adipinsäuredihydrazids ein. Man erhält eine feinteilige Dispersion (LD-Wert ≃86%), die einen Feststoffgehalt von 47% hat und die Filme ergibt, die eine Naßhaftung im Rollenschälversuch von ~4,9 N/3,5 cm und verminderte Neigung zum Weißanlaufen zeigen.

## Beispiel 7

Man arbeitet wie in Beispiel 5 angegeben, setzt jedoch im Zulauf I 45 Teile Formylstyrol anstelle des Diacetonacrylamid, 765 Teile (anstelle von 650 Teilen) Methylmethacrylat und 667 Teile 2-Äthylhexylacrylat anstelle des i-Butylacrylats ein. Statt des Dicarbonsäuredihydrazids verwendet man 40 Teile einer Verbindung der allgemeinen Formel

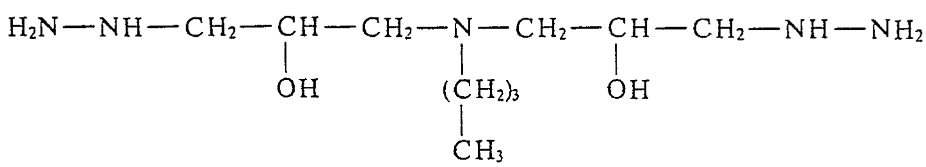

Die erhaltene feinteilige Dispersion hat einen Feststoffgehalt von 46% und ergibt Filme, die eine Naßhaftung nach Rollenschälversuch von etwa 19,61 N/3,5 cm und verminderte Neigung zum Weißanlaufen aufweisen.

Beispiel 8

Man legt im Reaktor vor:

| | |
|---|---|
| 420 Teile | Wasser |
| 2,5 Teile | einer 35%igen Lösung des in Beispiel 1 angegebenen anionischen Emulgators |
| 30 Teile | einer 20%igen Lösung des in Beispiel 1 angegebenen nichtionischen Emulgators |
| 75 Teile | einer 10%igen wäßrigen Lösung eines mit 10 Mol Äthylenoxid umgesetzten $C_{16}$—$C_{18}$-Fettalkoholgemisches |

Als Zulauf I dient eine Mischung aus:

| | |
|---|---|
| 820 Teilen | Wasser |
| 22,5 Teilen | einer 35%igen Lösung des in Beispiel 1 angegebenen anionischen Emulgators |
| 62 Teilen | einer 20%igen Lösung des in Beispiel 1 angegebenen nichtionischen Emulgators |
| 115 Teilen | einer 10%igen Lösung des obengenannten oxäthylierten Fettalkohols |
| 112 Teilen | einer 10%igen Lösung eines zu etwa 88% verseiften Polyvinylalkohols |
| 15 Teilen | vinylsulfonsaures Natrium |
| 675 Teilen | Styrol |
| 750 Teilen | n-Butylacrylat |
| 15 Teilen | Methacrylsäure |
| 15 Teilen | Methacrylamid |
| 75 Teilen | Diacetonacrylamid |

Als Zulauf II dient eine Lösung aus 11 Teilen Kaliumpersulfat in 330 Teilen Wasser.

Man spült den Reaktor mit Stickstoff, heizt die Vorlage auf 90°C, gibt 10% Zulauf I, dann 10% Zulauf II in einem Guß zu und fährt nach 15 Minuten den Rest von Zulauf I in 3, den Rest von Zulauf II in 3¹/₂ Stunden zu. Man hält noch 1¹/₂ Stunden die Polymerisationstemperatur bei 90°C, kühlt auf Raumtemperatur, stellt den pH-Wert der Dispersion mit Ammoniakwasser auf 7 bis 8 und gibt unter Rühren noch 35 Teile Adipinsäuredihydrazid sowie 20 Teile einer 1%igen wäßrigen Zinksulfatlösung zu. Man erhält eine Dispersion mit breiter Teilchengrößenverteilung und einem Feststoffgehalt von 44%, die Filme ergibt, die im Rollenschälversuch eine Naßhaftung von etwa 11,77 N/3,5 cm haben und die verminderte Neigung zum Weißanlaufen zeigen.

Beispiel 9

Herstellung einer Seidenglanzfarbe

Man mischt in der angegebenen Reihenfolge:

| | |
|---|---|
| 31 Teile | Wasser |
| 3 Teile | Konservierungsmittel (Chloracetamid) |
| 2 Teile | Ammoniak 25%ig |
| 3 Teile | handelsübliches Entschäumungsmittel auf Silikon-Basis |
| 8 Teile | Dispergiermittel auf Basis einer niedermolekularen Polyacrylsäure |
| 56 % | Verdickungsmittel (z. B. Vinylmethyläther-Maleinsäurehalbester-Copolymerisat, 15%ige wäßrige Lösung) |
| 47 Teile | Propylenglykol |
| 19 Teile | Butylglykol |
| 252 Teile | Titandioxid (Rutil) |
| 359 Teile | einer nach den Angaben in Beispiel 5 hergestellten Polymerdispersion |

Mit der erhaltenen Seidenglanzfarbe werden Anstriche von besonderer Wasserfestigkeit erhalten.

Beispiel 10

Herstellung eines Buntsteinputzes

Man mischt in der angegebenen Reihenfolge:

| | |
|---|---|
| 191 Teile | einer nach den Angaben in Beispiel 5 hergestellten Polymerdispersion |
| 38 Teile | einer 2%igen Lösung eines Celluloseäthers mit einer Viskosität zwischen 4000 bis 6000 mPa · s |

| | |
|---|---|
| 8 Teile | Isobuttersäureester eines höheren Alkohols |
| 1 Teil | Konservierungsmittel (Chloracetamid) |
| 762 Teile | Steingranulat |

Mit dem erhaltenen Buntsteinputz werden Verputzungen erhalten, die praktisch nicht weiß anlaufen.

## Patentanspruch

Durch Hydrazin-Verbindungen modifizierte Bindemittel für Anstrichmittel und Buntsteinputze, aus

(A) einer 20- bis 70%igen wäßrigen Dispersion eines Copolymerisats A einer Glastemperatur von 0 bis 50°C aus
  (a) Methacrylsäuremethylester, Styrol, Vinylacetat, tert.-Butylacrylat und/oder Vinylchlorid und gegebenenfalls zusätzlich Acrylnitril und
  (b) (Meth)acrylsäureestern 2 bis 8 C-Atome enthaltender Alkanole und/oder Vinylpropionat,

  die

  (c) 0,5—10% ihres Gewichts an 3 bis 5 C-Atome enthaltenden Mono- und/oder Dicarbonsäuren und/oder deren gegebenenfalls an den Stickstoffatomen durch 1 bis 4 C-Atome enthaltende Alkyl- und/oder Alkylolreste substituierte Amide und
  (d) 0,5—10% ihres Gewichts an Carbonylgruppen aufweisenden Monomeren einpolymerisiert enthalten,

gekennzeichnet durch einen Zusatz von

(B) je Mol in den Copolymerisaten A enthaltenen Carbonylgruppen 0,05—1 Mol wasserlöslichen aliphatischen Dihydrazin-Verbindungen und
(C) je Mol Dihydrazin-Verbindung 0,0002 bis 0,02 Mol wasserlöslichen Zink-, Mangan-, Cobalt- und/oder Bleisalzen.

## Claim

A binder, modified by a hydrazine compound, for paints and pebble dash renderings, which comprises

(A) an aqueous dispersion, of from 20 to 70% strength, of a copolymer A, having a glass transition temperature of 0—50°C, of
  (a) methyl methacrylate, styrene, vinyl acetate, tert.-butyl acrylate and/or vinyl chloride, with or without acrylonitrile, and
  (b) esters of acrylic acid or methacrylic acid with alkanols of 2 to 8 carbon atoms, and/or vinyl propionate, which contains, as copolymerized units,
  (c) from 0.5 to 10%, of its weight, of monocarboxylic acids and/or dicarboxylic acids of 3 to 5 carbon atoms and/or their amides optionally substituted at the nitrogen atoms by alkyl and/or alkylol radicals of 1 to 4 carbon atoms, and
  (d) from 0.5 to 10%, of its weight, of monomers containing carbonyl groups,

characterized by an addition of

(B) from 0.05 to 1 mole, per mole of carbonyl groups present in the copolymer A, of a water-soluble aliphatic dihydrazine compound, and
(C) from 0.0002 to 0.02 mole, per mole of dihydrazine compound, of a water-soluble zinc, manganese, cobalt and/or lead salt.

## Revendication

Liants pour compositions pour revêtements et enduits muraux, modifiés par des dérivés de l'hydrazine, composés de:

(A) une dispersion aqueuse à 20 jusqu'à 70% d'un copolymérisat A formé
  (a) de méthacrylate de méthyle, de styrène, d'acétate vinylique, d'acrylate tertiobutylique et(ou)

de chlorure de vinyle et éventuellement de nitrile acrylique et

(b) d'esters de l'acide (méth)acrylique d'alcanols en $C_2$ à $C_8$ et(ou) de propionate de vinyle, possédant une température de transition vitreuse entre 0 et 50° C, dans lesquels sont copolymérisés

(c) 0,5 à 10% de leur poids d'acides mono- et(ou) dicarboxyliques en $C_3$ à $C_5$ et(ou) d'amides de ces acides éventuellement substitués sur les atomes d'azote par des groupes alcoyle et(ou) alkylol en $C_1$ à $C_4$ et

(d) 0,5 à 10% de leur poids de monomères à groupes carbonyle,

caractérisés en ce qu'ils contiennent en outre:

(B) 0,05 à 1 mole de dérivés aliphatiques hydrosolubles de l'hydrazine par mole de groupes carbonyle dans le copolymérisat A et

(C) 0,0002 à 0,02 mole de sels hydrosolubles du zinc, du mangenèse, du cobalt et(ou) du plomb par mole de dérivé d'hydrazine.